(19) **Europäisches Patentamt / European Patent Office / Office européen des brevets**

(11) **EP 4 506 495 B1**

(12) **EUROPEAN PATENT SPECIFICATION**

(45) Date of publication and mention
of the grant of the patent:
**30.07.2025 Bulletin 2025/31**

(21) Application number: **23200360.8**

(22) Date of filing: **28.09.2023**

(51) International Patent Classification (IPC):
*D04H 1/02* (2006.01)      *D04H 1/4266* (2012.01)
*D04H 1/435* (2012.01)      *D04H 1/4382* (2012.01)
*D04H 1/4391* (2012.01)      *D04H 1/541* (2012.01)
*D04H 1/64* (2012.01)       *B32B 5/02* (2006.01)
*A41D 31/00* (2019.01)      *A41D 31/02* (2019.01)
*A41D 31/06* (2019.01)

(52) Cooperative Patent Classification (CPC):
**D04H 1/02; B32B 5/022; D04H 1/4266;
D04H 1/435; D04H 1/43828; D04H 1/43914;
D04H 1/5412; D04H 1/64;** A41D 31/065

(54) **WEB FOR DOWN PADDING, AND ULTRA-LIGHT DOWN PADDING WITH 4-WAY HIGH
ELASTICITY AND HIGH INSULATION INCLUDING THE SAME**

BAHN ZUM DAUNENPOLSTERN UND ULTRALEICHTE DAUNENPOLSTERUNG MIT
4-WEGE-HOHER ELASTIZITÄT UND HOHER ISOLIERUNG DAMIT

BANDE POUR REMBOURRAGE VERS LE BAS, ET REMBOURRAGE VERS LE BAS ULTRALÉGER
À ÉLASTICITÉ ÉLEVÉE À 4 VOIES ET ISOLATION ÉLEVÉE COMPRENANT CELLE-CI

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.08.2023 KR 20230103769**

(43) Date of publication of application:
**12.02.2025 Bulletin 2025/07**

(73) Proprietor: **TP Inc.
Seoul 08380 (KR)**

(72) Inventor: **LIM, Suk Won
06603 Seocho-gu (KR)**

(74) Representative: **Treeby, Philip David William et al
Maucher Jenkins
Seventh Floor Offices
Artillery House
11-19 Artillery Row
London SW1P 1RT (GB)**

(56) References cited:
**WO-A1-2016/118614      WO-A1-2018/081771
WO-A1-2019/213219      WO-A1-2022/177969
GB-A- 2 024 280      JP-A- 2014 080 720
KR-B1- 102 066 906**

## Description

### CROSS-REFERENCE TO RELATED APPLICATION

This application claims priority to and the benefit of Korean Patent Application No. 10-2023-0103769, filed on August 08, 2023.

### TECHNICAL FIELD

The present invention relates to ultra-light down padding having a thin thickness, excellent insulation, and excellent elasticity in 4-way (or multi-directions), a web for down padding used for manufacturing the same, and a method for manufacturing the same.

### BACKGROUND

Down products using duck down or goose down as winter clothing that can maintain body temperature during outdoor activities in winter have been preferred as high-end products in the market due to their excellent insulating power by containing a large amount of air between the downs.

As these down products emerge as the main items of winter fashion, the popularity of ultra-lightweight down jumpers, which are light and easy to carry, continues to increase, and accordingly, many developments are being made in relation to insulation and lightness.

However, in the case of down padding, downy hair lacks restoration and support powers, and hair loss caused by the down coming out along the seam line and the peculiar smell of down cause complaints about quality, as well as, poor product appearance and difficulty in washing due to hair clumping have been pointed out. In order to prevent hair loss and clumping of down products, by combining the core layer (web composed of down) and the lining of the down padding, cutting them into a structure having a structure with a plurality of compartments, or by combining the lining and outer fabric of down padding, cutting them into a structure having a plurality of compartments, and then filling the compartments with down to manufacture down padding, down padding was manufactured in a form in which down was filled inside a plurality of compartment structures, that is, in a form in which down was filled between seam lines (e.g., quilting structure, etc.), but down padding of this structure has a problem in that a cold spot is generated and the insulating power is reduced.

In addition, the recent trends in apparel products are emphasizing activity as well as design, however, the down padding having the compartment structure as described above has poor elasticity and restoring force, and the thickness of the down padding is too thick to secure high insulating power and heat retention, so there was a problem that did not fit the recent fashion trend.

### [Related Art Document]

### [Patent Document]

Korean Patent Registration No. 10-1334624 (registered 2013.11.25)

Korean Patent Registration No. 10-1669938 (registered 2016.10.21)

WO 2022/177969 A1 discloses batting that includes a bonded nonwoven web made from a fiber mixture containing: (a) 20 to 55 wt % of siliconized fibers having a denier of 1.5 to 10.0 and a length of 51 mm to 84 mm; (b) 10 to 45 wt % of hollow conjugate fibers having a spiral crimp, and having a denier of 1.5 to 10.0 and a length of 51 to 84 mm; (c) 10 to 45 wt % of a first population of binder fibers which are elastomeric co-polyester binder fibers having a denier of 1.5 to 8.0, a length of 51 mm to 84 mm, and a bonding temperature of 110°C to 180°C; and (d) 1 to 20 wt % of a second population of binder fibers, which have a denier of 1.5 to 6.0, a length of 51 mm to 84 mm, and a bonding temperature of 80°C to 135°C.

WO 2016/118614 A1 discloses migration resistant batting that includes a nonwoven web comprising a first surface parallel to a second surface, and a fiber mixture that includes: 35 to 65 wt % synthetic polymeric fibers having a denier of less than or equal to 1.0, wherein 50 to 100 wt% of said synthetic polymeric fibers are siliconized fibers; 10 to 30 wt % spiral-crimped synthetic polymeric fibers having a length of greater than or equal to 60mm, wherein 50 to 100 wt% of said spiral-crimped synthetic polymeric fibers are siliconized fibers; 20 to 50 wt % elastomeric fibers having a denier between 2.0 and 7.0; and 5 to 25 wt % synthetic binder fibers having a denier of 1.5 to 4.0, said binder fibers have a bonding temperature lower than the softening temperature of the synthetic polymeric fibers, wherein said first and second surfaces comprise a cross-linked resin. Also provided are articles comprising the batting and methods of making the batting.

### SUMMARY OF THE INVENTION

**Technical Problem**

The present invention is directed to providing a web for down padding having a composition optimized to make down padding integrated sheet type without formation of a compartment structure generating a cold spot and without needle punching, and greatly increase elasticity and recovery of down padding and have excellent thermal insulation, and an ultra-light down padding including the same as a filler (or a web layer).

**Technical Solution**

According to the present invention there is provided a web for down padding having a basis weight of 70 to 150 g/m², wherein: the web for down padding comprises: 25.0 to 50.0% by weight of a mixed down containing a mixture of feather with at least one selected from goose down and duck down; 9.0 to 18.0% by weight of hollow conjugate short fiber; 13.0 to 21.0% by weight of RSS (Regular Solid Siliconized Fiber) short fiber; and the remaining amount of non-stretchable low melting sheath-core composite fiber out of 100% by weight, a sheath part of the non-stretchable low melting sheath-core composite fiber is composed PET (polyethylene terephthalate) resin having a melting point of 100 to 150 °C, and a core part thereof is composed PET (polyethylene terephthalate) resin having a melting point of 250 °C or more, and the hollow conjugate short fiber and the RSS short fiber have a melting point of 260 °C or higher, wherein the hollow conjugate short fiber has an average fineness of 2.0 to 3.5 denier (de), an average fiber length of 45 to 60 mm, and the RSS short fiber has an average fineness of 2.0 to 3.5 denier, an average fiber length of 45 to 60 mm, and a number of crimps of 5.9 to 9.1/cm (15 to 23/inch).

In a preferred embodiment of the present invention, the mixed down includes 15 to 30% by weight of feathers and 70 to 85% by weight of down.

In a preferred embodiment of the present invention, the non-stretchable low melting sheath-core composite fiber has an average fineness of 3.0 to 5.0 de and an average fiber length of 45 to 60 mm.

In the present invention, each of the HCT short fiber and the RSS short fiber has a melting point of 260 °C or higher.

Another aspect of the present invention relates to ultra-light down padding with 4-way high elasticity and high insulation, and the down padding includes a web layer composed of the web for down padding; and sheet layers laminated on the upper and lower parts of the web layer and combined with the web layer, described above.

In a preferred embodiment of the present invention, the down padding of the present invention is a composite sheet in which a web layer and a sheet layer are integrally combined without a compartment structure that cause cold spots and needle punching.

In a preferred embodiment of the present invention, the sheet layer may include a multidirectional stretchable fabric of a net structure woven with high elastic polyester yarn.

In a preferred embodiment of the present invention, an acrylic resin layer may be included between the web layer and the sheet layer.

In a preferred embodiment of the present invention, when a basis weight of the web layer of the present invention is 80 to 100 g/m², the insulating power measured according to the ASTM D1518 method may satisfy 2.00 CLO or more.

In a preferred embodiment of the present invention, when a basis weight of the web layer of the down padding of the present invention is 80 to 100 g/m², the air permeability measured according to the ASTM D737 method may satisfy 100 CFM (cubic feet per minute) or more.

In a preferred embodiment of the present invention, when the basis weight of the web layer of the down padding of the present invention is 80 to 100 g/m², the drying rate after 1 hour measured according to the JIS L 1096 method may satisfy 30.0% or more.

In a preferred embodiment of the present invention, when the basis weight of the web layer of the down padding of the present invention is 80 to 100 g/m², the volume recovery rate may satisfy 83.0% or more.

In a preferred embodiment of the present invention, when the basis weight of the web layer of the down padding of the present invention is 80 to 100 g/m², the residual extension rate after 30 seconds measured according to the ASTM D3107 method and calculated by Equation 2 may satisfy 6.5% or less in the length direction and 8.0% or less in the traverse direction.

In a preferred embodiment of the present invention, when the basis weight of the web layer of the down padding of the present invention is 80 to 100 g/m², the residual extension rate after 30 minutes measured according to the ASTM D3107 method and calculated by Equation 2 may satisfy 3.0% or less in the length direction and 4.5% or less in the traverse direction.

Residual Extension rate = growth rate (%) = [{(original length + unrecovered length) - original length}/ original length] × 100%    [Equation 2]

In a preferred embodiment of the present invention, when the basis weight of the web layer of the down padding of the present invention is 80 to 100 g/m$^2$, the recovery rate after 30 seconds measured according to the ASTM D3107 method and calculated by Equation 3 may satisfy 70.0% or more in the length direction and 65.0% or more in the traverse direction.

In a preferred embodiment of the present invention, when the basis weight of the web layer of the down padding of the present invention is 80 to 100 g/m$^2$, the recovery rate after 30 minutes measured according to the ASTM D3107 method and calculated by Equation 3 may satisfy 75.0% or more in the length direction and 75.0% or more in the traverse direction.

--> Recovery rate (%) = [{maximum elongation length - (original length + unrecovered length)}/(maximum elongation length - original length)] $\times$ 100%     [Equation 3]

According to a second aspect of the present invention there is provided a method for manufacturing an ultra-light down padding with 4-way high elasticity and high insulation, the method comprises performing a process comprising: a first step of supplying mixed fibers for web formation in a bale state to a supply unit; a second step of performing bale breaking and opening processes on the mixed fibers for web formation supplied to the supply unit, respectively; a third step of carding the opened the mixed fibers for web formation; a fourth step of processing and manufacturing the carded mixed fibers for web formation into a web; a fifth step of performing a drying process after applying an acrylic resin to both surfaces of the web; and a sixth step of surface heat-treating the web to which the acrylic resin is fixed, laminating sheets on both surfaces of the web, rolling with a heating roll, and then packing to manufacture a down padding, wherein: the mixed fiber for web formation comprises: 25.0 to 50.0% by weight of down containing at least one selected from goose down and duck down; 9.0 to 18.0% by weight of hollow conjugate short fiber; 13.0 to 21.0% by weight of RSS (Regular Solid Siliconized Fiber) short fiber; and the remaining amount of non-stretchable low melting sheath-core composite fiber out of 100% by weight, a sheath part of the non-stretchable low melting sheath-core composite fiber has a melting point of 100 to 150 °C, and a core part thereof has a melting point of 250 °C or more, the hollow conjugate short fiber and the RSS short fiber have a melting point of 260 °C or higher, and the web in the fourth step has a basis weight of 70 to 150 g/m$^2$, a sheath part of the non-stretchable low melting sheath-core composite fiber is composed PET (polyethylene terephthalate) resin having a melting point of 100 to 150 °C, and a core part thereof is composed PET (polyethylene terephthalate) resin having a melting point of 250 °C or more, and the hollow conjugate short fiber and the RSS short fiber have a melting point of 260 °C or higher, wherein the hollow conjugate short fiber has an average fineness of 2.0 to 3.5 denier, an average fiber length of 45 to 60 mm, and the RSS short fiber has an average fineness of 2.0 to 3.5 denier, an average fiber length of 45 to 60 mm, and a number of crimps of 5.9 to 9.1/cm(15 to 23/inch).

## Advantageous Effects

The down padding of the present invention is ultra-light down padding without cold spot, having excellent heat retention, thermal insulation, and excellent elasticity, and restoring force, and having very low shape deformability. In addition, the down padding of the present invention has excellent drying properties and no down separation compared to conventional down padding.

## BRIEF DESCRIPTION OF THE DRAWINGS

FIG. 1 is a schematic view of a cross-sectional structure of a down padding of the present invention.
FIG. 2 is a schematic view of a down padding manufacturing process of the present invention.
A and B of FIG. 3 are photographs of the down padding manufactured in Example 1.
FIG. 4 is a photograph of an apparatus used to measure the elasticity of Experimental Example 2.

## DETAILED DESCRIPTION OF THE EMBODIMENTS

As used herein, the term "non-stretchable" means having a very low elongation and volume recovery rate, and refers to a characteristic in which the fiber does not return to its original shape after being stretched by an external force due to low elasticity.

As used herein, the term "4-way" means both directions in one direction in which the down padding is stretched and in both directions perpendicular thereto in a two-dimensional plane.

Hereinafter, the present invention will be described in more detail.

The web for down padding of the present invention is a web without cold spots, and is a web in the form of a sheet without a compartment structure and needle punching.

The web for down padding of the present invention may include a mixed down containing at least one selected from goose down and duck down; non-stretchable low melting sheath-core composite fiber, HCT (Hollow Conjugate Stretch) short fiber, and RSS (Regular Solid Siliconized Fiber) short fiber.

The mixed down includes at least one selected from goose down and duck down. In this case, the "mixed" of the mixed down does not mean a mixture of goose and/or duck down, but a mixture of feather and down.

And, the mixed down may include 15 to 30% by weight of feathers and 70 to 85% by weight of down, may preferably include 15 to 25% by weight of feathers and the remaining amount of down among 100% by weight, and may more preferably include 17.5 to 22.5% by weight of feathers and the remaining amount of down among 100% by weight. In this case, if the feather content is less than 15.0% by weight, there may be a problem in that the price competitiveness is greatly reduced because the down content is too high, and if the feather content exceeds 30.0% by weight, the insulation may be somewhat lowered, and there may be a problem with uneven product surfaces, and thus, considering insulation, marketability, etc., it is good to use feathers and down within the above range.

In addition, the non-stretchable low melting sheath-core composite fiber serves to bind mixed down and other fibers in the web and to stabilize the shape of the web, and is a fiber without stretchability (elasticity).

The sheath part of the non-stretchable low melting sheath-core composite fiber may be composed of PET (polyethylene terephthalate) resin having a melting point of 100 to 150 °C, preferably a melting point of 105 to 130 °C, more preferably a melting point of 105 to 120 °C. In addition, the core part of the non-stretchable low melting sheath-core composite fiber may be composed of PET resin having a melting point of 100 to 150 °C, preferably a melting point of 105 to 130 °C, more preferably a melting point of 250 °C or more, still more preferably a melting point of 250 to 280 °C, and yet still more preferably a melting point of 255 to 275 °C.

In this case, if the melting point of the resin for forming the sheath part is less than 100 °C, there may be a problem of poor fusion, and if the melting point of the resin for forming the sheath part exceeds 150 °C, there may be a problem that the product becomes hard. In addition, if the melting point of the resin forming the core part is less than 250 °C, there may be a problem of loosening the connection between the yarns, and if the melting point of the resin for forming the core part exceeds 280 °C, there may be a problem in that the connection between the yarns becomes hard and hardens.

And, as the non-stretchable low melting sheath-core composite fiber, those having an average fineness of 3.0 to 5.0 de and an average fiber length of 45 to 60 mm, preferably those having an average fineness of 3.5 to 4.7 de and an average fiber length of 45 to 58 mm, and more preferably having an average fineness of 3.7 to 4.5 de and an average fiber length of 48 to 55 mm may be used. In this case, if the average fineness of the non-stretchable low melting sheath-core composite fiber is less than 3.0 de, there may be a problem in that the thickness is lowered, and if the average fineness of the non-stretchable low melting sheath-core composite fiber exceeds 5.0 de, there may be a problem that the product does not feel soft. In addition, the average fiber length of the non-stretchable low melting sheath-core composite fiber is less than 45 mm, there may be a problem of poor coupling between yarns, and if the average fiber length exceeds 60.0 mm, there may be a problem that the yarn is tangled and the thickness is lowered.

Next, the RSS short fibers constituting the web serve to increase the strength, flexibility, and softness of the web, and fibers that have no heat fusion under the conditions of the web manufacturing process and the down padding process using the same. Therefore, the RSS short fiber is a fiber that satisfies the melting point of 260 °C or more, preferably 260 to 300 °C. In a preferred embodiment, silicone-coated polyester fibers may be used as the RSS short fibers to increase miscibility with other fibers, and in a preferred example, PET fibers coated by mixing 100% PET (polyethylene terephthalate) regular short fibers with aliphatic alcohol, phosphate mixture, and low molecular weight alcohol mixture silicone emulsion can be used as RSS short fibers.

In addition, as the RSS short fibers, those having an average fineness of 2.0 to 3.5 de, an average fiber length of 45 to 60 mm, and a number of crimps of 15 to 23/inch may be used, preferably those having an average fineness of 2.0 to 3.0 de, an average fiber length of 45 to 58 mm, and a number of crimps of 17 to 23/inch may be used, and more preferably those having an average fineness of 2.2 to 2.8 de, an average fiber length of 48 to 55 mm, and a number of crimps of 18 to 22/inch may be used. In this case, if the average fineness of the RSS short fibers is less than 2.0 de, there may be a problem in that the yarns do not bond well due to the lack of strength of the yarns, and if the average fineness of the non-stretchable RSS short fibers exceeds 3.0 de, there may be a problem in that the soft touch of the product is lowered. In addition, the average fiber length of the RSS short fibers is less than 45 mm, there may be a problem of poor coupling between yarns, and if the average fiber length exceeds 60.0 mm, there may be a problem that the yarn is tangled and the thickness is lowered. In addition, if the number of crimps of RSS short fibers is less than 15/inch, there may be a problem in that the restoring force is lowered, and if the number of crimps exceeds 13/inch, there may be a problem of low bonding strength between yarns.

Next, the HCT short fibers constituting the web serve to impart elasticity and restoring force to the web, and the HCT short fiber is a fiber that satisfies a melting point of 260 °C or higher, preferably a melting point of 265 °C or higher. In a preferred embodiment, the HCT short fibers may be polyester fibers satisfying the melting point, more preferably PET (polyethylene terephthalate) fibers.

And, as the HCT short fibers, those having an average fineness of 2.0 to 3.5 de and an average fiber length of 45 to 60 mm may be used, preferably those having an average fineness of 2.0 to 3.0 de and an average fiber length of 45 to 58 mm may be used, and more preferably those having an average fineness of 2.2 to 2.8 de and an average fiber length of 48 to 55 mm may be used. In this case, if the average fineness of the HCT short fibers is less than 2.0 de, there may be a problem of lowering elasticity, and if the average fineness of the non-stretchable HCT short fibers exceeds 3.0 de, there may be a problem of lowering restoring force after elasticity. In addition, the average fiber length of the HCT short fibers is less than 45 mm, there may be a problem of low bonding strength, and if the average fiber length exceeds 60.0 mm, there may be a problem that the yarn is tangled and the thickness is lowered.

The web for down padding of the present invention composed of the fibers described above may include 25.0 to 50.0% by weight of the mixed down, 9.0 to 18.0% by weight of the HCT short fibers, 13.0 to 21.0% by weight of RSS short fibers, and the remaining amount of the non-stretchable low melting sheath-core composite fiber among 100% by weight, preferably may include 28.0 to 45.0% by weight of the mixed down, 9.5 to 16.5% by weight of the HCT short fibers, 14.0 to 21.0% by weight of RSS short fibers, and the remaining amount of the non-stretchable low melting sheath-core composite fiber among 100% by weight, and more preferably may include 29.0 to 42.0% by weight of the mixed down, 9.8 to 16.3% by weight of the HCT short fibers, 14.0 to 20.5% by weight of RSS short fibers, and the remaining amount of the non-stretchable low melting sheath-core composite fiber among 100% by weight. In this case, if the mixed down content in the web is less than 25% by weight, insulation may be insufficient, and if it exceeds 50% by weight, the content of other fibers is relatively reduced, which may be unsuitable for down padding with high elasticity and restoring force to be manufactured by applying the web. In addition, if the content of HCT short fibers in the web is less than 9% by weight, there may be problems such as poor stretchability and elasticity of the web, and even if it exceeds 18% by weight, there may be no further increase in stretchability, so it is good to use it within the above range. In addition, if the RSS short fiber content in the web is less than 13% by weight, the strength and flexibility of the web are too insufficient, and thus the marketability and processability may be deteriorated, and it used in excess of 22% by weight, the strength of the web is increased, but the insulation of the web may be relatively reduced, so it is recommended to use it within the above range.

It is preferable that the web for down padding (single-layer web and/or composite web) of the present invention has a basis weight of 70 to 150 g/m$^2$, preferably has a basis weight of 75 to 140 g/m$^2$, and more preferably has a basis weight of 78 to 135 g/m$^2$ in terms of securing physical properties such as thin characteristics, ultra-light weight, and high insulation of the down padding to which the web is applied.

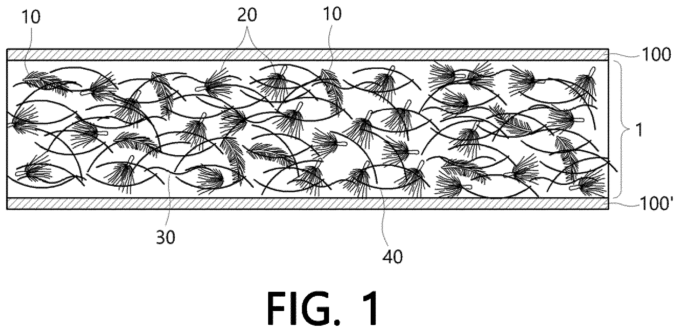

Describing the ultra-light down padding with 4-way high elasticity and high insulation, as schematically shown in FIG. 1, the down padding of the present invention includes a web layer 1 composed of the web for down padding; and sheet layers 100 and 100' laminated on the upper and lower parts of the web layer and combined with the web layer, described above, and the web layer and the sheet layer are combined without a cold spot to form an integrated composite sheet.

In addition, an acrylic resin layer may be included between the web layer and the sheet layer.

In addition, the sheet layer may be a multidirectional stretchable fabric of a net structure woven with high elastic polyester yarn.

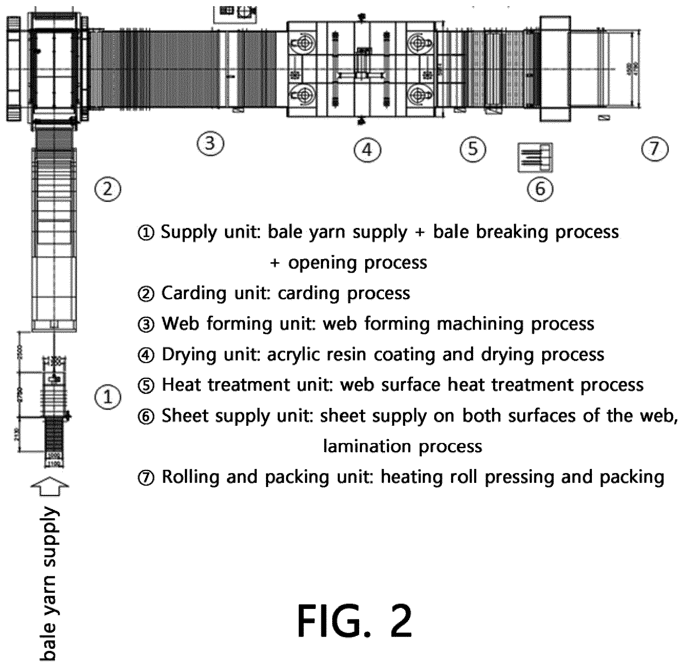

The down padding of the present invention can be manufactured through a process as shown in a schematic process diagram in FIG. 2. More specifically describing, it can be manufactured by performing a process including a first step of supplying yarn in a bale state to a supply unit; a second step of performing bale breaking and opening processes on the yarn supplied to the supply unit, respectively; a third step of carding the opened yarn; a fourth step of processing and manufacturing the carded yarn into a web; a fifth step of performing a drying process after applying an acrylic resin to both surfaces of the web; and a sixth step of surface heat-treating the web to which the acrylic resin is fixed, laminating sheets on both surfaces of the web, rolling with a heating roll, and then packing.

When the basis weight of the web layer of the down padding of the present invention described above is 80 to 100 g/m$^2$, the insulating power measured according to the ASTM D1518 method may satisfy 2.00 CLO or more, preferably 2.05 to 3.00 CLO, and more preferably 2.10 to 2.96 CLO.

In addition, when the basis weight of the web layer of the down padding of the present invention is 80 to 100 g/m$^2$, the air permeability measured according to the ASTM D737 method may satisfy 100.0 CFM (cubic feet per minute) or more, preferably 120.0 to 150.000 CFM, and more preferably 125.0 to 145.000 CFM.

In addition, when the basis weight of the web layer of the down padding of the present invention is 80 to 100 g/m$^2$, the drying rate after 1 hour measured according to the JIS L 1096 method may satisfy 30.0% or more, preferably 31.0 to 40.0%, and more preferably 31.0 to 38.5%.

In addition, when the basis weight of the web layer of the down padding of the present invention is 80 to 100 g/m$^2$, the volume recovery rate may satisfy 83.0% or more, preferably 85.0 to 92.0%, and more preferably 85.0 to 90.0%.

In addition, when the basis weight of the web layer of the down padding of the present invention is 80 to 100 g/m$^2$, the residual extension rate after 30 seconds measured according to the ASTM D3107 method and calculated by Equation 2 below may satisfy 6.5% or less in the length direction and 8.0% or less in the traverse direction, preferably 1.0 to 6.2% in the length direction and 3.0 to 7.0% in the traverse direction, and more preferably 1.4 to 6.0% in the length direction and 3.5 to 6.7% in the traverse direction.

In addition, when measuring the residual extension rate after 30 minutes in the same way, it may satisfy 5.0% or less in the length direction and 4.5% or less in the transverse direction, preferably 1.0 to 4.8% in the length direction and 1.2 to 4.5% in the transverse direction, and more preferably 1.0 to 4.5% in the length direction and 2.0 to 4.2% in the transverse direction.

In this case, the length direction refers to a warp yarn direction of the fabric constituting the down padding sheet layer, and the transverse direction refers to a weft yarn direction of the fabric constituting the down padding sheet layer.

Residual Extension rate = growth rate (%) = [{(original length + unrecovered length) - original length}/ original length] x 100%    [Equation 2]

In addition, when the basis weight of the web layer of the down padding of the present invention is 80 to 100 g/m$^2$, the recovery rate after 30 seconds measured according to the ASTM D3107 method and calculated by Equation 3 may satisfy 70.0% or more in the length direction and 65.0% or more in the traverse direction, preferably 70.0 to 86.0% in the length direction and 65.0 to 80.0% in the traverse direction, and more preferably 65.0 to 85.0% in the length direction and 66.5 to 80.0% in the traverse direction.

In addition, when measuring the recovery rate after 30 minutes in the same way, it may satisfy 75.0% or more in the length direction and 75.0% or more in the transverse direction, preferably 76.0 to 90.0% in the length direction and 76.5 to 87.5% in the transverse direction, and more preferably 77.5 to 89.0% in the length direction and 77.0 to 87.0% in the transverse direction.

In this case, the length direction refers to a warp yarn direction of the fabric constituting the down padding sheet layer, and the transverse direction refers to a weft yarn direction of the fabric constituting the down padding sheet layer.

Recovery rate (%) = [{maximum elongation length - (original length + unrecovered length)}/(maximum elongation length - original length)] $\times$ 100%    [Equation 3]

Hereinafter, the present invention will be described in more detail through the following examples, but the following examples are not intended to limit the scope of the present invention, which should be construed to aid understanding of the present invention.

**[Examples]**

**Example 1: Manufacturing of down padding**

A mixed down containing 20% by weight of baled duck feathers and 80% by weight of duck down was prepared.

A non-stretchable low melting sheath-core composite fiber having an average fineness of 4 de and an average fiber length of 51 mm was prepared (manufacturer: Huvis, product name: LMF). In this case, the composite fiber is a fiber in which the sheath part is composed of polyethylene terephthalate resin having a melting point of 110 °C and the core part is composed of PET resin having a melting point of 250 °C, and the cross-sectional area ratio of the core part and the sheath part is 1:1.

As RSS (Regular Solid Siliconized Fiber) short fibers, silicone-coated PET (Polyethylene terephthalate) fibers (manufacturer: Huvis, product name: Regular short fibers) having a melting point of 260 °C or higher were prepared. The RSS fiber had an average fineness of 2.5 de and an average fiber length of 51 mm.

As HCT (Hollow Conjugate Stretch) short fibers, PET fibers (manufacturer: Huvis, product name: ZENTRA) having a melting point of 260 °C or higher were prepared. The HCT fiber had an average fineness of 2.5 de and an average fiber length of 51 mm.

Down padding was manufactured through a process schematically shown in FIG. 2 by supplying the mixed down, non-stretchable low melting sheath-core composite fiber, RSS short fiber, and HCT short fiber as yarn.

By supplying the yarn to a supply unit, bale breaking and opening processes were performed.

Next, the opened yarn was transferred to a carding machine and subjected to carding.

Next, the carded yarn was transferred to a web forming unit and processed to form a web to prepare a web.

Next, the web was transferred to a drying unit, an acrylic resin (manufacturer: WOLSUNG VINA, product name: MEDIUM RESIN) was spray-coated on one surface of the web, and then primary drying was performed, and then acrylic resin was spray-coated on the other surface of the web, and then secondary drying was performed to fix the acrylic resin to the upper and lower parts of the web. In this case, the drying temperature was 145 °C to 155 °C, and the two spray coatings and the first and second drying are continuous processes.

Next, the web on which the acrylic resin layer is formed was transferred to a heat treatment unit and subjected to surface heat treatment at 310 °C to 350 °C, and then transferred to a sheet supply unit and a multidirectional stretchable fabric (manufacturer: Chargeurs PCC, product name: #6029) of a net structure woven with high elastic polyester yarn was laminated on both upper and lower surfaces of the web.

Next, it was compressed and integrated with a heating roll, and then packed to manufacture an integral composite sheet type down padding.

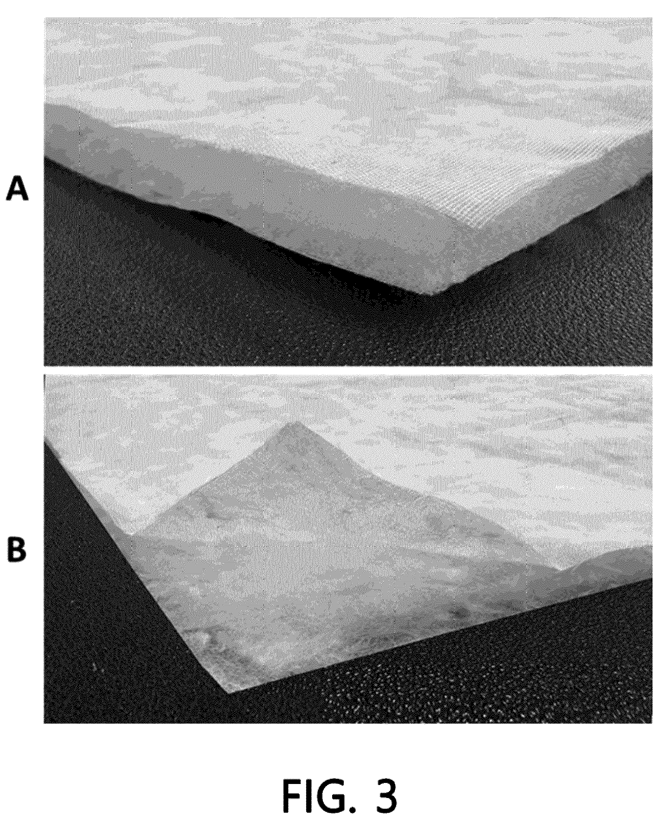

The manufactured down padding is composed of a single-layer web and an integrated sheet layer laminated and combined on the upper and lower parts of the web, and pictures of the manufactured down padding are shown in A and B of FIG. 3.

In addition, the web was composed of 30% by weight of mixed down, 17% by weight of HCT short fibers, 17% by weight of RSS short fibers, and 36% by weight of non-stretchable low melting sheath-core composite fibers, and had a basis weight of 100 g/m$^2$.

**<Examples 2 to 6 and Comparative Examples 1 to 6>**

Down padding was manufactured in the same manner as in Example 1, but the content or basis weight of the fibers in the web was varied as shown in Table 1 below, and Examples 2 to 5 and Comparative Examples 1 to 6 were respectively performed.

However, in the case of Examples 3 to 6 and Comparative Examples 1 to 6, as a multidirectional stretchable fabric constituting the sheet layer formed on both upper and lower surfaces of the down padding web, down padding was manufactured using the stretchable fabric (manufacturer: Picardie, product name: 6029) instead of the stretchable fabric of Example 1 (manufacturer: Wonyoung, product name: J30G) and the stretchable fabric of Example 2 (manufacturer: Sejin, product name: 3015F).

[Table 1]

| Classification (wt. %) | Mixed down | HCT short fiber | RSS short fiber | Non-stretchable low melting sheath-core composite fiber | Nonwoven fabric Basis weight (g/m$^2$) |
|---|---|---|---|---|---|
| Example 1 | 30 | 17 | 17 | 36 | 100 |
| Example 2 | 40 | 10 | 20 | 30 | 80 |
| Example 3 | 40 | 10 | 20 | 30 | 80 |
| Example 4 | 40 | 12 | 18 | 30 | 80 |
| Example 5 | 40 | 18 | 12 | 30 | 80 |
| Example 6 | 40 | 15 | 15 | 30 | 140 |
| Comparative Example 1 | 40 | 8 | 22 | 30 | 80 |
| Comparative Example 2 | 40 | 20 | 10 | 30 | 80 |
| Comparative Example 3 | 23 | 18 | 18 | 41 | 80 |
| Comparative Example 4 | 52 | 13 | 13 | 22 | 80 |
| Comparative Example 5 | 40 | 15 | 15 | 30 | 65 |
| Comparative Example 6 | 40 | 15 | 15 | 30 | 160 |

**Experimental Example 1: Measurement of insulation, quick-drying, air permeability, hair loss, and recovery**

Insulation, quick-drying, air permeability and hair loss evaluation experiments of the down padding prepared in the above Examples and Comparative Examples were conducted by requesting Intertek Testing Services Korea Ltd and IDFL Laboratory and Institute.

In addition, control group 1 is down padding with a basis weight of 80 g/m$^2$ including 50 wt.% of mixed down containing 20 wt.% of duck down feathers and 80 wt.% of duck down hair, 35 wt.% of sorona fiber, and 15 wt.% of PET fiber.

In addition, control group 2 is down padding with a basis weight of 80 g/m$^2$ including 85 wt.% of mixed down containing 20 wt.% of duck down feathers and 80 wt.% of duck down hair, and 15 wt.% of polyester fiber.

In addition, control group 3 is down padding (product name: syncloud basic GRS) with a basis weight of 80 g/m$^2$ composed of 100% polyester.

**(1) How to measure insulation**

The test method was measured in accordance with ASTM D1518, and the specific test method is as follows.

1) A hood was placed on the bare plate (heating element, set at 35 °C), and the environmental temperature of the chamber was set at 20 °C and humidity at 65%.
2) When the heat exchange between the environmental temperature and humidity and the bare plate was stabilized, the insulating power (Rct0) of the bare plate was measured.
3) The test piece was placed on the bare plate so that no wrinkles or tension were applied, and steps 1) to 2) were performed in order. In this case, the test piece was in a mock-up or sheet type padding state, and the size was 550 mm X 550 mm in width and length.
4) When heat exchange between the environmental temperature and humidity, the plate, and the test piece were stabilized, the insulating power (Rct) of the test piece was measured.
5) The result value of insulating power (CLO) = (Rct - Rct0) x 6.45 can be obtained.

The insulating power of 1 CLO is a unit representing heat resistance, and refers to a state of warmth in which people can feel comfortable, dissipating heat of 58 $W/m^2$ when the wind speed is 0.1 m/s and the ambient temperature is 21 °C. 1 CLO is equivalent to 0.155K $m^2$/W.

The insulation measurement results are shown in Table 2 below, and the higher the CLO value, which is a unit representing insulation, means the better the insulation.

**(2) How to measure quick-drying**

The test method was measured in accordance with JIS L 1096:2010, and the specific test method is as follows.

1) Prepare a mock-up test piece with dimensions of 400 mm×400 mm in width and length.
2) The test piece was sufficiently absorbed in distilled water at 20 °C (±2 °C).
3) Take it out of the water and mount it on the equipment when water droplets stop falling.
4) It was left in the test room in a standard state and the time until it was naturally dried and returned to its original weight was measured, the average value was expressed in integer digits, and the dried ratio (%) and complete drying time after 1 hour were measured.

**(3) How to measure air permeability**

The test method was measured in accordance with ASTM D737, and the specific test method is as follows.

1) After conditioning, proceed with equipment calibration.
2) After confirming that "0" dl is measured with the reference material, mount the test piece on a test piece platform so that there are no wrinkles or folds. In this case, the down padding itself was used as the test piece, and the size was 550 mm×550 mm in width and length.
3) The measured results were recorded, and the average value obtained by repeating the test 10 times was used as the measured value. In addition, the measurement was performed with the test area (Test area: 38 $cm^2$) and the test pressure (Test pressure: 125 pa), which are the standards of the Americas.

**(4) How to measure hair loss**

The test method was measured in accordance with the FED STD FTMS 5530 International Method (International Method, based on the Federal Standard 191-5530), and less than 5 hair loss is acceptable. As for the test conditions, the size of the tumbling box was 45 cm×45 cm×45 cm (width, length, height), and RPM (revolution per minute) 48 (±2) and the tumbling time (Duration of Tumbling) was set to 30 minutes.

**(5) How to measure restorability**

Restorability was measured in the following way.

1) Prepare a test piece for restoring force.

2) After placing the test piece flat, measure the height (Hb) in units of 1 mm before starting.

3) Leave it in a constant temperature and humidity room and place a 1 kg weight on it for 1 minute.

4) Remove the weight and measure the height (Ha) after a recovery time of 1 minute.

5) Calculate the restored ratio as a percentage using Equation 1 below.

[Equation 1]

Volume recovery rate (%) = Ha / Hb × 100%

[Table 2]

| Classification (°C) | Insulation (CLO) | Quick-drying | | Air permeability CFM (Cubic feet per minute) | Hair loss (count) | Volume recovery rate |
|---|---|---|---|---|---|---|
| | | Drying rate after 1 hour | Complete drying time | | | |
| Control group 1 | 1.62 | 29.4% | 510 minutes | 113.8 | 0 | 66.1% |
| Control group 2 | 2.54 | 38.8% | 340 minutes | 92.5 | 0 | 84.9% |
| Control group 3 | 1.60 | 34.0% | 335 minutes | 165.6 | 0 | 92.4% |
| Example 1 | 2.55 | 36.4% | 350 minutes | 138.5 | 0 | 86.5% |
| Example 2 | 2.17 | 31.3% | 460 minutes | 133.1 | 0 | 86.7% |
| Example 3 | 2.94 | 36.6% | 345 minutes | 140.2 | 0 | 88.9% |
| Example 4 | 2.65 | 36.2% | 355 minutes | 104.5 | 0 | 85.2% |
| Example 5 | 2.71 | 36.8% | 350 minutes | 108.3 | 0 | 83.5% |
| Example 6 | 2.88 | 30.9% | 370 minutes | 127.0 | 0 | 83.1% |
| Comparative Example 1 | 2.65 | 35.6% | 350 minutes | 116.4 | 0 | 71.0% |
| Comparative Example 2 | 2.34 | 37.4% | 335 minutes | 138.6 | 0 | 79.4% |
| Comparative Example 3 | 1.83 | 38.2% | 340 minutes | 146.8 | 0 | 89.3% |
| Comparative Example 4 | 3.12 | 30.3% | 425 minutes | 96.0 | 2 | 69.3% |
| Comparative Example 5 | 1.78 | 37.8% | 325 minutes | 144.7 | 0 | 90.1% |
| Comparative Example 6 | 3.27 | 24.6% | 480 minutes | 90.7 | 0 | 78.3% |

Looking at the physical property measurement results in Table 2, the down paddings of Examples 1 to 6 had insulation of 2.00 CLO or more, air permeability of 100 CFM or more, and good quick-drying of 30% or more, but no hair loss. In addition, it was confirmed that the down paddings of Examples 1 to 6 had an excellent volume recovery rate of 83.0% or more.

On the other hand, in the case of Comparative Example 1 using a small amount of HCT short fibers, compared to Examples 2 and 3, there was a problem in that the volume recovery rate was slightly lowered. And, in the case of Comparative Example 2 using HCT short fibers in excess of 18% by weight, physical properties such as insulation, quick-drying, and air permeability were good, but compared to Examples 2 and 3, there was a problem in that the volume recovery rate decreased rapidly.

In the case of Comparative Example 3, in which the mixed down content was used too little, such as 25% by weight, other physical properties were good, but there was a problem in that the insulation was relatively less than 2.0 CLO.

In the case of Comparative Example 4 in which the amount of sheath-core composite fiber was relatively small due to the excessive use of mixed down, unlike other Examples and Comparative Examples in which there was no problem with hair loss, there was a problem in that hair loss occurred, and there was a problem in that the quick-drying was reduced and the volume recovery rate was greatly reduced.

In the case of Comparative Example 5 having a basis weight of the web layer of 65 g/m$^2$, physical properties such as insulation, quick-drying, and air permeability were good, but there was a problem in that the insulation was less than 2.00 CLO and insufficient, and in the case of Comparative Example 6 having a basis weight of the web layer of 160 g/m², the insulation was very good, but there was a problem that the quick-drying and air permeability were relatively poor, and the volume recovery rate was less than 80% and insufficient.

**Experimental Example 2: Measurement of elasticity**

In the elasticity test, a high value of elongation is interpreted as an excellent product, but it is also a test that can confirm that durability and appearance are well maintained by considering the values of elongation and recovery. In general, the smaller the residual extension rate (or growth rate, non-recovered part) and the larger the recovery rate, the better the performance.

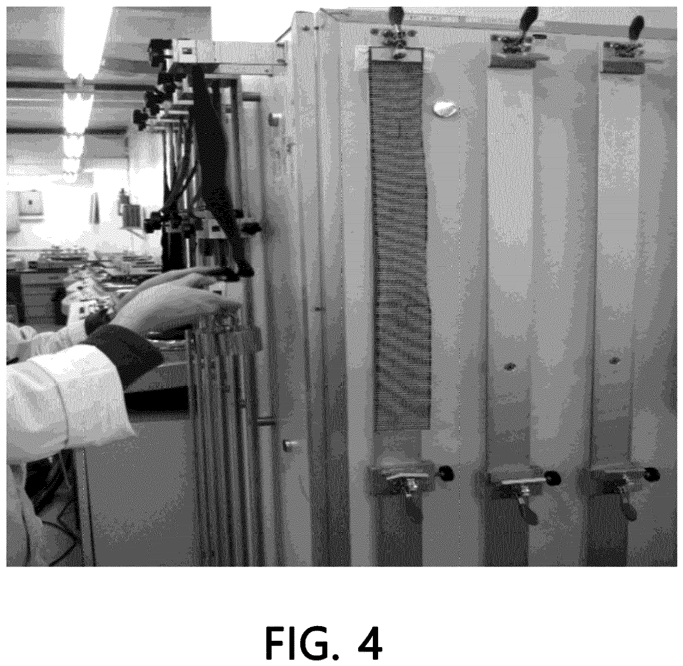

The elasticity was measured according to the ASTM D3107 method, the specific measurement method is as follows, and a photograph of the device used in the test is shown in FIG. 4.

1) 6 samples with a size of 2.5 inches x 22 inches (width, length) with the length direction parallel to the stretch direction were taken, and an equal number of fibers were unwound from both sides of the test piece to make them in a width of 2.00 (±0.05) inches.

2) Fold the lengthwise end of the test piece for stretching to about 1.25 inches, stitch the 1-inch part, and spread it out on a flat surface for 30 minutes without external force.

3) The test piece was allowed to stand for 4 hours under standard conditions of 21(±1) °C and 65(±2)% RH.

4) Make a benchmark in the center of the test piece (minimum length: 10 (±0.05) inches).

5) Hang one of both ends of the sewn loop-type test piece on the upper clamp, measure the length of the benchmarked part of the test piece, and record it in units of 1 mm.

6) Insert a dowel pin into the loop at the bottom of the test piece and hang a weight of 4 lbs or 3 lbs.

7) Cycle three times so that a load of 0 to 4 lbs (3 lbs) can be applied to the test piece.

8) Measure the degree of stretch after 10 seconds or 30 minutes.

9) Using the clamp of the tension meter, stretch it to a length (H) of 85% of the calculated stretch percentage and fix it.

10) After fixing it in a stretched state for 30 minutes, remove the test piece from the lower clamp.

11) Measure the benchmark according to each Client Time Option for the test piece from which the load is removed, and record it in units of 1 mm.

Residual Extension rate or growth rate was calculated based on Equation 2, recovery rate was calculated by Equation 3, and stretch percentage was calculated by Equation 4.

Residual Extension rate = growth rate (%) = [{(original length + unrecovered length) - original length}/ original length] × 100%    [Equation 2]

Recovery rate (%) = [{maximum elongation length - (original length + unrecovered length)}/(maximum elongation length - original length)] × 100%    [Equation 3]

Stretch percentage (or elongation, %) = [{(maximum elongation length) - original length}/original length] × 100%    [Equation 4]

In Table 3 below, the length direction refers to a warp yarn direction of the fabric constituting the down padding sheet layer, and the transverse direction refers to a weft yarn direction of the fabric constituting the down padding sheet layer. In addition, the physical property measurement values in Table 3 show the average value of the values measured by performing three times.

[Table 3]

| Classification | | Control group 1 | Control group 2 | Example 1 | Example 2 | Example 3 | Example 4 | Example 5 | Example 6 |
|---|---|---|---|---|---|---|---|---|---|
| Residual extension rate after 30 seconds (%) | Length | 2.0 | 4.4 | 2.4 | 1.6 | 1.3 | 1.9 | 4.6 | 5.2 |
| | Traverse | 2.8 | 7.2 | 5.2 | 4.4 | 4.0 | 4.3 | 5.4 | 6.5 |

(continued)

| Classification | | Control group 1 | Control group 2 | Example 1 | Example 2 | Example 3 | Example 4 | Example 5 | Example 6 |
|---|---|---|---|---|---|---|---|---|---|
| Residual extension rate after 30 minutes (%) | Length | 1.6 | 3.2 | 1.6 | 1.2 | 1.0 | 2.2 | 4.5 | 3.1 |
| | Traverse | 2.0 | 4.8 | 3.6 | 3.2 | 3.0 | 3.9 | 4.0 | 4.2 |
| After applying tension, stretch percentage at 30 minutes (%) | Length | 8.8 | 16.4 | 17.6 | 14.4 | 18.2 | 17.9 | 16.8 | 18.3 |
| | Travers e | 12.4 | 18.4 | 27.2 | 17.2 | 20.1 | 19.8 | 17.9 | 20.5 |
| Recovery rate after 30 seconds (%) | Length | 73.7 | 68.6 | 83.8 | 71.4 | 84.2 | 79.5 | 77.8 | 65.5 |
| | Traverse | 73.1 | 33.8 | 77.6 | 70.3 | 78.3 | 74.5 | 73.1 | 67.3 |
| Recovery rate after 30 minutes (%) | Length | 78.9 | 77.1 | 89.2 | 78.6 | 89.5 | 84.4 | 80.2 | 79.8 |
| | Traverse | 80.8 | 69.2 | 84.5 | 78.4 | 86.7 | 82.6 | 78.5 | 77.4 |

[Table 4]

| Classification | | Comparative Example 1 | Comparative Example 2 | Comparative Example 3 | Comparative Example 4 | Comparative Example 5 | Comparative Example 6 |
|---|---|---|---|---|---|---|---|
| Residual extension rate after 30 seconds (%) | Length | 7.5 | 8.2 | 8.4 | 4.8 | 2.1 | 7.6 |
| | Traverse | 8.8 | 9.6 | 8.2 | 5.0 | 4.6 | 8.3 |
| Residual extension rate after 30 minutes (%) | Length | 4.2 | 4.5 | 4.7 | 3.3 | 1.2 | 2.7 |
| | Traverse | 5.6 | 5.2 | 6.3 | 4.7 | 2.4 | 4.6 |
| After applying tension, stretch percentage at 30 minutes (%) | Length | 23.6 | 19.8 | 13.5 | 13.4 | 18.5 | 10.5 |
| | Traverse | 30.9 | 25.3 | 17.8 | 20.7 | 24.9 | 12.1 |
| Recovery rate after 30 seconds (%) | Length | 60.8 | 77.0 | 64.0 | 67.7 | 80.7 | 55.9 |
| | Traverse | 62.6 | 65.8 | 67.6 | 67.1 | 77.4 | 59.2 |
| Recovery rate after 30 minutes (%) | Length | 54.6 | 62.4 | 60.1 | 74.8 | 83.5 | 55.3 |
| | Traverse | 58.3 | 70.5 | 68.5 | 70.2 | 80.1 | 65.2 |

Looking at Tables 3 and 4, it was confirmed that the down padding of the present invention, Examples 1 to 6, had a low residual extension rate and a high recovery rate overall, and through this, it was confirmed that the product had high elasticity.

In contrast, in the case of Comparative Example 1 using less than 9% by weight of HCT short fibers and more than 21% by weight of RSS short fibers, there was a problem that the residual extension rate was low and the recovery rate was greatly reduced.

In addition, in the case of Comparative Example 2 using more than 18% by weight of HCT short fibers and less than 13% by weight of RSS short fibers, there was a problem of low recovery rate while having a high residual extension rate compared to Example 5.

And, in the case of Comparative Example 3 using a small amount of mixed down, as confirmed in Experimental Example 1, the insulation was not good, and the residual extension rate and recovery rate showed poor results, which is judged to be the result of the relatively excessive use of the non-stretchable sheath-core composite fiber. On the other hand, in the case of Comparative Example 4, when compared to Example 6, it was confirmed that the insulation was very good, but there was a problem that the residual extension rate was somewhat high and the recovery rate was relatively low.

In addition, in the case of Comparative Example 5 having a basis weight of the nonwoven fabric of 65 g/m$^2$, residual extension rate and recovery rate were good, but as confirmed in Experimental Example 1 above, there was a problem with poor insulation, and in the case of Comparative Example 5 having a basis weight of the nonwoven fabric of 160 g/m$^2$, when compared to Example 6, there was a problem in that the residual extension rate was low, but the recovery rate was greatly reduced.

Through the above Examples and Experimental Examples, it was confirmed that the down padding of the present invention has excellent insulation even in a low basis weight range and excellent elasticity in 4-way (or multi-directions), and it was confirmed that the down padding of the present invention can provide an ultra-light and functional down padding product.

<Description of Symbols>

| | | | |
|---|---|---|---|
| 1: | web (layer) for down padding | 100, 100': | sheet layer |
| 10: | feather | 20: | down |
| 30: | RSS short fiber | 40: | HCT short fiber |

## Claims

1. A web for down padding having a basis weight of 70 to 150 g/m$^2$, wherein:
   the web for down padding comprises:

   25.0 to 50.0% by weight of a mixed down containing a mixture of feather with at least one selected from goose down and duck down; 9.0 to 18.0% by weight of hollow conjugate short fiber; 13.0 to 21.0% by weight of RSS (Regular Solid Siliconized Fiber) short fiber; and the remaining amount of non-stretchable low melting sheath-core composite fiber out of 100% by weight,
   a sheath part of the non-stretchable low melting sheath-core composite fiber is composed PET (polyethylene terephthalate) resin having a melting point of 100 to 150 °C, and a core part thereof is composed PET (polyethylene terephthalate) resin having a melting point of 250 °C or more, and
   the hollow conjugate short fiber and the RSS short fiber have a melting point of 260 °C or higher,
   wherein the hollow conjugate short fiber has an average fineness of 2.0 to 3.5 denier, an average fiber length of 45 to 60 mm, and
   the RSS short fiber has an average fineness of 2.0 to 3.5 denier, an average fiber length of 45 to 60 mm, and a number of crimps of 5.9 to 9.1/cm (15 to 23/inch).

2. The web for down padding of claim 1, wherein the down comprises 15 to 30% by weight of feathers and 70 to 85% by weight of down.

3. The web for down padding of claim 1, wherein:

   the non-stretchable low melting sheath-core composite fiber has an average fineness of 3.0 to 5.0 denier and an average fiber length of 45 to 60 mm,
   the hollow conjugate short fiber has an average fineness of 2.0 to 3.5 de(denier), an average fiber length of 45 to 60 mm, and a number of crimps of 15 to 23/inch, and

the RSS short fiber has an average fineness of 2.0 to 3.5 de(denier) and an average fiber length of 45 to 60 mm.

4. An ultra-light down padding with 4-way high elasticity and high insulation, the ultra-light down padding comprising:

a web layer composed of the web for down padding of claim 1; and
sheet layers laminated on the upper and lower parts of the web layer and combined with the web layer,
wherein the sheet layer comprises a fabric of a net structure woven with high elastic polyester yarn, and
the web layer and the sheet layer are combined without a compartment structure and needle punching to form an integrated composite sheet.

5. The ultra-light down padding with 4-way high elasticity and high insulation of claim 4, comprising an acrylic resin layer between the web layer and the sheet layer.

6. The ultra-light down padding with 4-way high elasticity and high insulation of claim 4, wherein:

when a basis weight of the web layer is 80 to 100 g/m$^2$,
an insulating power measured according to the ASTM D1518 method satisfies 2.00 CLO or more, and
an air permeability measured according to the ASTM D737 method satisfies 100 CFM (cubic feet per minute) or more.

7. The ultra-light down padding with 4-way high elasticity and high insulation of claim 4, wherein:

when a basis weight of the web layer is 80 to 100 g/m$^2$,
a drying rate after 1 hour measured according to the JIS L 1096 method satisfies 30.0% or more, and
a volume recovery rate according to Equation 1 below satisfies 83.0% or more.

[Equation 1]

$$\text{Volume recovery rate (\%)} = Ha / Hb \times 100\%$$

The volume recovery rate in Equation 1 is calculated by placing the test piece flat, measuring the height(Hb) before starting, measuring the length in 1 mm units, leaving it in a constant temperature and humidity room, and placing a 1 kg weight on it for 1 minute. Then, after removing the weight, the height (Ha) was measured after a recovery time of 1 minute.

8. The ultra-light down padding with 4-way high elasticity and high insulation of claim 4, wherein:

when a basis weight of the web layer is 80 to 100 g/m$^2$,
a residual extension rate after 30 seconds measured according to the ASTM D3107 method and calculated by Equation 2 below satisfies 6.5% or less in the length direction and 8.0% or less in the traverse direction,
a recovery rate after 30 seconds measured according to the ASTM D3107 method and calculated by Equation 3 satisfies 70.0% or more in the length direction and 65.0% or more in the traverse direction:

Residual Extension rate = growth rate (%) = [{(original length + unrecovered length) - original length}/original length] $\times$ 100%　　　　[Equation 2]

Recovery rate (%) = [{maximum elongation length - (original length + unrecovered length)}/ (maximum elongation length - original length)] $\times$ 100%.　　　　[Equation 3]

9. A method for manufacturing an ultra-light down padding with 4-way high elasticity and high insulation, the method comprises performing a process comprising:

a first step of supplying mixed fibers for web formation in a bale state to a supply unit;
a second step of performing bale breaking and opening processes on the mixed fibers for web formation supplied to the supply unit, respectively;
a third step of carding the opened the mixed fibers for web formation;

a fourth step of processing and manufacturing the carded mixed fibers for web formation into a web;
a fifth step of performing a drying process after applying an acrylic resin to both surfaces of the web; and
a sixth step of surface heat-treating the web to which the acrylic resin is fixed, laminating sheets on both surfaces of the web, rolling with a heating roll, and then packing to manufacture a down padding,
wherein:

the mixed fiber for web formation comprises: 25.0 to 50.0% by weight of down containing at least one selected from goose down and duck down; 9.0 to 18.0% by weight of hollow conjugate short fiber; 13.0 to 21.0% by weight of RSS (Regular Solid Siliconized Fiber) short fiber; and the remaining amount of non-stretchable low melting sheath-core composite fiber out of 100% by weight,
a sheath part of the non-stretchable low melting sheath-core composite fiber has a melting point of 100 to 150 °C, and a core part thereof has a melting point of 250 °C or more,
the hollow conjugate short fiber and the RSS short fiber have a melting point of 260 °C or higher, and
the web in the fourth step has a basis weight of 70 to 150 g/m$^2$,
a sheath part of the non-stretchable low melting sheath-core composite fiber is composed PET (polyethylene terephthalate) resin having a melting point of 100 to 150 °C, and a core part thereof is composed PET (polyethylene terephthalate) resin having a melting point of 250 °C or more, and
the hollow conjugate short fiber and the RSS short fiber have a melting point of 260 °C or higher,
wherein the hollow conjugate short fiber has an average fineness of 2.0 to 3.5 denier, an average fiber length of 45 to 60 mm, and
the RSS short fiber has an average fineness of 2.0 to 3.5 denier, an average fiber length of 45 to 60 mm, and a number of crimps of 5.9 to 9.1/cm(15 to 23/inch).

## Patentansprüche

1. Bahn für Daunenfüllung, die ein Flächengewicht von 70 bis 150 g/m$^2$ aufweist, wobei:
die Bahn für Daunenfüllung Folgendes umfasst:

25,0 bis 50,0 Gewichts-% einer gemischten Daune, die eine Mischung aus Federn mit mindestens einer enthält, die aus Gänsedaune und Entendaune ausgewählt ist; 9,0 bis 18,0 Gewichts-% hohle konjugierte Kurzfaser; 13,0 bis 21,0 Gewichts-% RSS (Regular Solid Siliconized Fiber) -Kurzfaser; und die verbleibende Menge an nicht-dehnbarer, niedrig schmelzender Mantel-Kern-Verbundfaser bis zu 100 Gewichts-%,
wobei ein Mantelteil der nicht-dehnbaren, niedrig schmelzenden Mantel-Kern-Verbundfaser aus PET (Polyethylenterephthalat) -Harz besteht, das einen Schmelzpunkt von 100 bis 150 °C aufweist, und ein Kernteil davon aus PET (Polyethylenterephthalat) -Harz besteht, das einen Schmelzpunkt von 250 °C oder höher aufweist, und
die hohle konjugierte Kurzfaser und die RSS-Kurzfaser einen Schmelzpunkt von 260 °C oder höher aufweisen,
wobei die hohle konjugierte Kurzfaser eine durchschnittliche Feinheit von 2,0 bis 3,5 Denier, eine durchschnittliche Faserlänge von 45 bis 60 mm aufweist und
die RSS-Kurzfaser eine durchschnittliche Feinheit von 2,0 bis 3,5 Denier, eine durchschnittliche Faserlänge von 45 bis 60 mm und eine Anzahl von Kräuselungen von 5,9 bis 9,1/cm (15 bis 23/Zoll) aufweist.

2. Bahn für Daunenfüllung nach Anspruch 1, wobei die Daune 15 bis 30 Gewichts- % Federn und 70 bis 85 Gewichts-% Daune umfasst.

3. Bahn für Daunenfüllung nach Anspruch 1, wobei:

die nicht-dehnbare, niedrig schmelzende Mantel-Kern-Verbundfaser eine durchschnittliche Feinheit von 3,0 bis 5,0 Denier und eine durchschnittliche Faserlänge von 45 bis 60 mm aufweist,
die hohle konjugierte Kurzfaser eine durchschnittliche Feinheit von 2,0 bis 3,5 den (Denier), eine durchschnittliche Faserlänge von 45 bis 60 mm und eine Anzahl von Kräuselungen von 15 bis 23/Zoll aufweist und
die RSS-Kurzfaser eine durchschnittliche Feinheit von 2,0 bis 3,5 den (Denier) und eine durchschnittliche Faserlänge von 45 bis 60 mm aufweist.

4. Ultraleichte Daunenfüllung mit hoher 4-Wege-Elastizität und hoher Isolierung, wobei die ultraleichte Daunenfüllung Folgendes umfasst:

eine Bahnschicht, die aus der Bahn für Daunenfüllung nach Anspruch 1 besteht; und

Lagenschichten, die auf den oberen und unteren Teil der Bahnschicht geschichtet und mit der Bahnschicht vereinigt sind,

wobei die Lagenschicht einen Stoff aus einer Netzstruktur, die mit hochelastischem Polyestergarn gewoben ist, umfasst und

die Bahnschicht und die Lagenschicht ohne eine Kammerstruktur und Vernadelung vereinigt sind, um eine integrierte Verbundlage zu bilden.

5. Ultraleichte Daunenfüllung mit hoher 4-Wege-Elastizität und hoher Isolierung nach Anspruch 4, die eine Acrylharzschicht zwischen der Bahnschicht und der Lagenschicht umfasst.

6. Ultraleichte Daunenfüllung mit hoher 4-Wege-Elastizität und hoher Isolierung nach Anspruch 4, wobei,

wenn ein Flächengewicht der Bahnschicht 80 bis 100 g/m² beträgt,

eine Isolierleistung, die gemäß dem ASTM D1518 Verfahren gemessen wird, 2,00 CLO oder mehr erfüllt und eine Luftdurchlässigkeit, die gemäß dem ASTM D737 Verfahren gemessen wird, 100 CFM (Kubikfuß pro Minute) oder mehr erfüllt.

7. Ultraleichte Daunenfüllung mit hoher 4-Wege-Elastizität und hoher Isolierung nach Anspruch 4, wobei,

wenn ein Flächengewicht der Bahnschicht 80 bis 100 g/m² beträgt,

eine Trocknungsrate nach 1 Stunde, die gemäß dem JIS L 1096 Verfahren gemessen wird, 30,0 % oder mehr erfüllt und

eine Volumenwiederherstellungsrate gemäß Gleichung 1 nachstehend 83,0 % oder mehr erfüllt.

[Gleichung 1]

$$\text{Volumenwiederherstellungsrate (\%)} = Ha / Hb \times 100 \%$$

Die Volumenwiederherstellungsrate in Gleichung 1 wird durch Folgendes berechnet: flaches Platzieren des Prüfstücks, Messen der Höhe (Hb) vor Beginn, Messen der Länge in 1-mm-Einheiten, Belassen dessen in einem Raum mit konstanter Temperatur und Feuchtigkeit und Platzieren eines 1-kg-Gewichts darauf für 1 Minute. Dann wurde nach Entfernen des Gewichts die Höhe (Ha) nach einer Wiederherstellungszeit von 1 Minute gemessen.

8. Ultraleichte Daunenfüllung mit hoher 4-Wege-Elastizität und hoher Isolierung nach Anspruch 4, wobei,

wenn ein Flächengewicht der Bahnschicht 80 bis 100 g/m² beträgt,

eine Restausdehnungsrate nach 30 Sekunden, die gemäß dem ASTM D3107 Verfahren gemessen wird und durch Gleichung 2 nachstehend berechnet wird, 6,5 % oder weniger in der Längsrichtung und 8,0 % oder weniger in der Querrichtung erfüllt,

eine Wiederherstellungsrate nach 30 Sekunden, die gemäß dem ASTM D3107 Verfahren gemessen wird und durch Gleichung 3 berechnet wird, 70,0 % oder mehr in der Längsrichtung und 65,0 % oder mehr in der Querrichtung erfüllt:

Restausdehnungsrate = Zunahmerate (%) = [{(ursprüngliche Länge + nicht-wiederhergestellte Länge) - ursprüngliche Länge}/ursprüngliche Länge] x 100 %          [Gleichung 2]

Wiederherstellungsrate (%) = [{ maximale Ausdehnungslänge - (ursprüngliche Länge + nicht-wiederhergestellte Länge)}/(maximale Ausdehnungslänge - ursprüngliche Länge)] x 100 %.          [Gleichung 3]

9. Verfahren zur Herstellung einer ultraleichten Daunenfüllung mit hoher 4-Wege-Elastizität und hoher Isolierung, wobei das Verfahren das Durchführen eines Prozesses umfasst, der Folgendes umfasst:

einen ersten Schritt des Zuführens von gemischten Fasern zur Bahnbildung in einem Ballenzustand zu einer Zuführeinheit;

einen zweiten Schritt des Durchführens von Ballenbrechungs- bzw. - öffnungsprozessen an den gemischten Fasern zur Bahnbildung, die der Zuführeinheit zugeführt werden;
einen dritten Schritt des Kardierens der geöffneten gemischten Fasern zur Bahnbildung;
einen vierten Schritt des Aufbereitens und Verarbeitens der kardierten gemischten Fasern zur Bahnbildung zu einer Bahn;
einen fünften Schritt des Durchführens eines Trocknungsprozesses nach Auftragen eines Acrylharzes auf beide Oberflächen der Bahn; und
einen sechsten Schritt der Oberflächenwärmebehandlung der Bahn, an der das Acrylharz fixiert wird, Schichten von Lagen auf beide Oberflächen der Bahn, Walzen mit einer Heißwalze und dann Packen zur Herstellung einer Daunenfüllung,
wobei:

die gemischte Faser zur Bahnbildung Folgendes umfasst: 25,0 bis 50,0 Gewichts- % einer Daune, die mindestens eine enthält, die aus Gänsedaune und Entendaune ausgewählt ist; 9,0 bis 18,0 Gewichts-% hohle konjugierte Kurzfaser; 13,0 bis 21,0 Gewichts-% RSS (Regular Solid Siliconized Fiber)-Kurzfaser; und die verbleibende Menge an nicht-dehnbarer, niedrig schmelzender Mantel-Kern-Verbundfaser bis zu 100 Gewichts-%,
ein Mantelteil der nicht-dehnbaren, niedrig schmelzenden Mantel-Kern-Verbundfaser einen Schmelzpunkt von 100 bis 150 °C aufweist und ein Kernteil davon einen Schmelzpunkt von 250 °C oder höher aufweist,
die hohle konjugierte Kurzfaser und die RSS-Kurzfaser einen Schmelzpunkt von 260 °C oder höher aufweisen,
die Bahn in dem vierten Schritt ein Flächengewicht von 70 bis 150 g/m$^2$ aufweist,
wobei ein Mantelteil der nicht-dehnbaren, niedrig schmelzenden Mantel-Kern-Verbundfaser aus PET (Polyethylenterephthalat) -Harz besteht, das einen Schmelzpunkt von 100 bis 150 °C aufweist, und ein Kernteil davon aus PET (Polyethylenterephthalat) -Harz besteht, das einen Schmelzpunkt von 250 °C oder höher aufweist,
und
die hohle konjugierte Kurzfaser und die RSS-Kurzfaser einen Schmelzpunkt von 260 °C oder höher aufweisen,
wobei die hohle konjugierte Kurzfaser eine durchschnittliche Feinheit von 2,0 bis 3,5 Denier, eine durchschnittliche Faserlänge von 45 bis 60 mm aufweist und
die RSS-Kurzfaser eine durchschnittliche Feinheit von 2,0 bis 3,5 Denier, eine durchschnittliche Faserlänge von 45 bis 60 mm und eine Anzahl von Kräuselungen von 5,9 bis 9,1/cm (15 bis 23/Zoll) aufweist.

**Revendications**

1. Nappe pour rembourrage en duvet ayant une masse surfacique de 70 à 150 g/m$^2$, dans laquelle :
la nappe pour rembourrage en duvet comprend :

25,0 à 50,0 % en poids d'un duvet mixte contenant un mélange de plumes avec au moins l'un choisi parmi du duvet d'oie et du duvet de canard ; 9,0 à 18,0 % en poids d'une fibre courte conjuguée creuse ; 13,0 à 21,0 % en poids de fibre courte RSS (fibre siliconée pleine régulière) ; et le reste de fibre composite gaine-âme non étirable à bas point de fusion pour atteindre 100 % en poids,
une partie gaine de la fibre composite gaine-âme non étirable à bas point de fusion est composée de résine PET (polyéthylène téréphtalate) ayant un point de fusion de 100 à 150 °C, et une partie âme de celle-ci est constituée de résine PET (polyéthylène téréphtalate) ayant un point de fusion de 250 °C ou plus, et
la fibre courte conjuguée creuse et la fibre courte RSS ont un point de fusion de 260 °C ou plus,
dans laquelle la fibre courte conjuguée creuse a une finesse moyenne de 2,0 à 3,5 deniers, une longueur moyenne de fibre de 45 à 60 mm, et
la fibre courte RSS a une finesse moyenne de 2,0 à 3,5 deniers, une longueur moyenne de fibre de 45 à 60 mm, et un nombre de frisures de 5,9 à 9,1/cm (15 à 23/pouce).

2. Nappe pour rembourrage en duvet selon la revendication 1, dans laquelle le duvet comprend 15 à 30 % en poids de plumes et 70 à 85 % en poids de duvet.

3. Nappe pour rembourrage en duvet selon la revendication 1, dans laquelle :

la fibre composite gaine-âme non étirable à bas point de fusion a une finesse moyenne de 3,0 à 5,0 deniers et une longueur moyenne de fibre de 45 à 60 mm,
la fibre courte conjuguée creuse a une finesse moyenne de 2,0 à 3,5 den (deniers), une longueur moyenne de fibre de 45 à 60 mm, et un nombre de frisures de 15 à 23/pouce, et
la fibre courte RSS a une finesse moyenne de 2,0 à 3,5 den (deniers) et une longueur moyenne de fibre de 45 à 60 mm.

4.  Rembourrage en duvet ultraléger doté de grande élasticité quadridirectionnelle et de grand pouvoir isolant, le rembourrage en duvet ultraléger comprenant :

    une couche de nappe constituée de la nappe pour rembourrage en duvet selon la revendication 1 ; et
    des couches de feuilles stratifiées sur les parties supérieure et inférieure de la couche de nappe et combinées à la couche de nappe,
    dans lequel la couche de feuille comprend un tissu à structure en filet tissé avec un fil de polyester hautement élastique, et
    la couche de nappe et la couche de feuille sont combinées sans structure compartimentée ni perforation d'aiguille pour former une feuille composite intégrée.

5.  Rembourrage en duvet ultraléger doté de grande élasticité quadridirectionnelle et de grand pouvoir isolant selon la revendication 4, comprenant une couche de résine acrylique entre la couche de nappe et la couche de feuille.

6.  Rembourrage en duvet ultraléger doté de grande élasticité quadridirectionnelle et de grand pouvoir isolant selon la revendication 4, dans lequel :

    quand une masse surfacique de la couche de nappe est de 80 à 100 g/m$^2$,
    un pouvoir isolant mesuré selon la méthode de la norme ASTM D1518 satisfait 2,00 CLO ou plus, et
    une perméabilité à l'air mesurée selon la méthode de la norme ASTM D737 satisfait 100 CFM (pieds cubes par minute) ou plus.

7.  Rembourrage en duvet ultraléger doté de grande élasticité quadridirectionnelle et de grand pouvoir isolant selon la revendication 4, dans lequel :

    quand une masse surfacique de la couche de nappe est de 80 à 100 g/m$^2$,
    un taux de séchage après 1 heure mesuré selon la méthode de la norme JIS L 1096 satisfait 30,0 % ou plus, et
    un taux de récupération de volume selon l'équation 1 ci-dessous satisfait 83,0 % ou plus.

    [Équation 1]

    $$\text{Taux de récupération de volume (\%)} = Ha / Hb \times 100\ \%$$

    Le taux de récupération de volume de l'équation 1 est calculé en plaçant la pièce d'essai à plat, en mesurant sa hauteur (Hb) avant de démarrer, en mesurant sa longueur en unité de 1 mm, en la laissant dans une pièce à température et humidité constante, et plaçant dessus un poids de 1 kg pendant 1 minute. Ensuite, après avoir retiré le poids, la hauteur (Ha) a été mesurée après un temps de récupération de 1 minute.

8.  Rembourrage en duvet ultraléger doté de grande élasticité quadridirectionnelle et de grand pouvoir isolant selon la revendication 4, dans lequel :

    quand une masse surfacique de la couche de nappe est de 80 à 100 g/m$^2$,
    un taux d'extension résiduelle après 30 secondes mesuré selon la méthode de la norme ASTM D3107 et calculé à l'aide de l'équation 2 ci-dessous satisfait 6,5 % ou moins dans la direction de longueur et 8,0 % ou moins dans la direction de largeur,
    un taux de récupération après 30 secondes mesuré selon la méthode de la norme ASTM D3107 et calculé à l'aide de l'équation 3 satisfait 70,0 % ou plus dans la direction de longueur et 65,0 % ou plus dans la direction de largeur :

    [Équation 2] Taux d'extension résiduelle = taux de croissance (%) = [{(longueur d'origine + longueur non récupérée) - longueur d'origine}/longueur d'origine] x 100 %     [Equation 2]

[Équation 3] Taux de récupération (%) = [{longueur à l'allongement maximal - (longueur d'origine + longueur non récupérée)}/(longueur à l'allongement maximal - longueur d'origine)] x 100 %.     [Equation 3]

9. Procédé de fabrication d'un rembourrage en duvet ultraléger doté de grande élasticité quadridirectionnelle et de grand pouvoir isolant, le procédé comprenant les étapes consistant à réaliser :

une première étape d'alimentation de fibres mixtes pour formation de nappe à l'état de balle à une unité d'alimentation ;
une deuxième étape de réalisation des processus de rupture et d'ouverture de balle sur les fibres mixtes pour formation de nappe alimentées à l'unité d'alimentation, respectivement ;
une troisième étape de cardage des fibres mixtes ouvertes pour formation de nappe ;
une quatrième étape de traitement et de fabrication des fibres mixtes cardées pour formation de nappe en une nappe ;
une cinquième étape de réalisation d'un processus de séchage après application d'une résine acrylique aux deux surfaces de la nappe ; et
une sixième étape de traitement thermique de surface de la nappe à laquelle la résine acrylique est fixée, stratification des feuilles sur les deux surfaces de la nappe, laminage avec un rouleau chauffant, puis emballage pour fabriquer un rembourrage en duvet,
dans lequel :

la fibre mixte pour formation de nappe comprend : 25,0 à 50,0 % en poids d'un duvet contenant au moins l'un choisi parmi du duvet d'oie et du duvet de canard ; 9,0 à 18,0 % en poids d'une fibre courte conjuguée creuse ; 13,0 à 21,0 % en poids de fibre courte RSS (fibre siliconée pleine régulière) ; et le reste de fibre composite gaine-âme non étirable à bas point de fusion pour atteindre 100 % en poids,
une partie gaine de la fibre composite gaine-âme non étirable à bas point de fusion a un point de fusion de 100 à 150 °C, et une partie âme de celle-ci a un point de fusion de 250 °C ou plus,
la fibre courte conjuguée creuse et la fibre courte RSS ont un point de fusion de 260 °C ou plus, et
la nappe de la quatrième étape a une masse surfacique de 70 à 150 g/m$^2$,
une partie gaine de la fibre composite gaine-âme non étirable à bas point de fusion est composée de résine PET (polyéthylène téréphtalate) ayant un point de fusion de 100 à 150 °C, et une partie âme de celle-ci est constituée de résine PET (polyéthylène téréphtalate) ayant un point de fusion de 250 °C ou plus, et
la fibre courte conjuguée creuse et la fibre courte RSS ont un point de fusion de 260 °C ou plus,
dans laquelle la fibre courte conjuguée creuse a une finesse moyenne de 2,0 à 3,5 deniers, une longueur moyenne de fibre de 45 à 60 mm, et
la fibre courte RSS a une finesse moyenne de 2,0 à 3,5 deniers, une longueur moyenne de fibre de 45 à 60 mm, et un nombre de frisures de 5,9 à 9,1/cm (15 à 23/pouce).

FIG. 1

① Supply unit: bale yarn supply + bale breaking process
+ opening process

② Carding unit: carding process

③ Web forming unit: web forming machining process

④ Drying unit: acrylic resin coating and drying process

⑤ Heat treatment unit: web surface heat treatment process

⑥ Sheet supply unit: sheet supply on both surfaces of the web,
lamination process

⑦ Rolling and packing unit: heating roll pressing and packing

bale yarn supply

# FIG. 2

A

B

FIG. 3

FIG. 4

**EP 4 506 495 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230103769
- KR 101334624
- KR 101669938
- WO 2022177969 A1
- WO 2016118614 A1